# FASCICULE DE BREVET EUROPEEN

(11) **EP 0 710 502 B1**
(45) Date de publication et mention de la délivrance du brevet: **23.02.2000**
(21) Numéro de dépôt: 95402478.2
(22) Date de dépôt: 06.11.1995
(51) Int. Cl.: B01J 23/96, C10G 35/085

(54) **Procédé de régénération hors site de catalyseur comprenant au moins un métal précieux**
Verfahren zur ex-situ Regeneration von Edelmetall enthaltenden Katalysatoren
Process for the off-site regeneration of noble metal comprising catalyst

(30) Priorité: 07.11.1994 FR 9413431
(43) Date de publication de la demande: 08.05.1996
(73) Titulaire: EURECAT EUROPEENNE DE RETRAITEMENT DE CATALYSEURS, F-07800 La Voulte-sur-Rhône (FR)
(72) Inventeur: Dufresne, Pierre, F-26000 Valence (FR); Brahma, Nilanjan, F-07800 La Voulte sur Rhône (FR)
(74) Mandataire: Andreeff, François

(56) Documents cités:
- EP-A- 0 378 482
- EP-A- 0 567 700
- FR-A- 2 072 456
- US-A- 4 026 821
- US-A- 5 001 095

## Description

L'invention concerne un procédé de régénération d'un catalyseur usé de traitement d'hydrocarbures, de préférence de réformage, comprenant au moins un métal précieux, de préférence le platine, éventuellement au moins un métal additionnel choisi dans le groupe formé par les métaux des groupes 7, 8, 9, 10, 13 et 14 de la classification périodique des éléments et le cuivre, éventuellement au moins un halogène, de façon préférée du chlore et au moins un support poreux, de préférence de l'alumine. L'invention concerne notamment, par exemple, la régénération d'un catalyseur de reformage catalytique contenant au moins du platine et au moins un halogène, de préférence du chlore.

Le procédé de réformage catalytique est un procédé très largement utilisé par les raffineurs pour valoriser l'essence lourde obtenue par distillation, d'indice d'octane faible. La transformation chimique de la charge d'essence lourde comportant principalement des hydrocarbures contenant de 7 à 10 atomes de carbone par molécule consiste principalement en la transformation des n-paraffines et des naphtènes compris dans la charge en hydrocarbures aromatiques, par des réactions dont les plus recherchées sont fortement endothermiques. Ladite transformation, appelée réformage catalytique, est obtenue généralement à haute température (de l'ordre de 500°C), à pression basse à moyenne (3,5 à 25.10⁵Pa) et en présence d'un catalyseur. Elle produit du réformat, un gaz riche en hydrogène, du gaz combustible (C₁ -C₂) et des gaz liquéfiés (C₃ + C₄), ainsi que du coke.

Le catalyseur de réformage est généralement un solide poreux sous la forme de petits bâtonnets (extrudés), de billes ou de grains, et comprend de l'alumine, du chlore, du platine et un métal additionnel choisi dans le groupe formé par les métaux des groupes 7, 8, 9, 10, 13 et 14 de la classification périodique des éléments et le cuivre, tel que le thallium, le manganèse, le germanium, l'indium, l'iridium, le rhénium ou l'étain, de préférence le rhénium ou l'étain. Le catalyseur de réformage est un produit très élaboré dont le coût est très élevé compte tenu de l'utilisation de métal (métaux) précieux.

Au cours du procédé de réformage catalytique, l'activité du catalyseur se réduit progressivement principalement par dépôt de coke à la surface. Il est donc nécessaire périodiquement de procéder à une opération de régénération qui comprend principalement l'élimination du coke par brûlage contrôlé, généralement en présence d'air dilué par l'azote, (opération appelée ci-après combustion du coke) et l'oxychloration, qui permet principalement de redisperser les métaux mais aussi d'ajuster l'acidité de l'alumine par ajout en milieu oxydant de chlore ou de composé organique chloré (opération appelée ci-après oxychloration).

L'opération conventionnelle de régénération du catalyseur de réformage a lieu in-situ, c'est-à-dire sur le site des raffineries (sur site), et elle est conduite différemment selon le procédé de réformage catalytique utilisé.

Dans le cas où le procédé de réformage catalytique est un procédé de type continu ou CCR, c'est-à-dire Continuous Catalytic Reforming, le catalyseur s'écoule progressivement (lit circulant) dans les zones de réaction dans lesquelles s'écoule la charge et où se produisent les réactions chimiques associées au réformage catalytique, puis est soutiré de la dernière zone de réaction pour être dirigé vers une zone de régénération. La durée d'un cycle (réaction + régénération) pour le catalyseur est généralement comprise entre 0,1 et 10 jours. Dans la zone de régénération, le catalyseur est tout d'abord généralement stocké dans un ballon d'accumulation puis amené dans la zone de régénération proprement dite où il est procédé à la combustion du coke, puis à l'oxychloration. Le catalyseur est reconduit dans la première zone de réaction, généralement après passage dans un ballon d'accumulation, après une opération de réduction qui permet de mettre le catalyseur dans un état où il sera actif pour la réaction de réformage et éventuellement une opération de sulfuration qui correspond à une passivation par le soufre du métal additionnel utilisé, laquelle opération a lieu selon la nature dudit métal (on procède à cette sulfuration par exemple pour le rhénium mais pas pour l'étain). Mais ladite opération de réduction ainsi que ladite opération éventuelle de sulfuration peuvent aussi avoir lieu dans la première zone de réaction. Finalement, dans ce cas, le catalyseur est régénéré dans une zone distincte des zones réactionnelles mais en contact direct avec celles-ci.

Dans le cas où le procédé de réformage est un procédé de type semi-régénératif (appelé aussi à lit fixe), le catalyseur est présent dans les zones réactionnelles dans lesquelles circule la charge, mais le catalyseur ne circule pas d'une zone réactionnelle à une autre pendant que se produisent les réaction chimiques associées au réformage catalytique. On procède dans ce cas périodiquement à la régénération, généralement pendant 7 à 10 voire 15 jours tous les 3 mois à 12 mois d'utilisation selon la sévérité des opérations. Le catalyseur reste en zone réactionnelle qui devient zone de régénération. Dans certains types de procédés comportant plusieurs zones réactionnelles, il est aussi possible d'isoler une zone réactionnelle des autres zones réactionnelles, de façon à ce qu'elle serve de zone de régénération pendant que les autres zones réactionelles continuent à réaliser le réformage catalytique, mais alors on ne procède à la régénération que d'une partie du catalyseur présent dans toutes les zones réactionnelles. Ainsi dans ce cas le catalyseur est régénéré dans une zone qui est aussi zone réactionnelle.

Il existe aussi des cas où le procédé de réformage catalytique est un procédé de technologie mixte, c'est-à-dire qu'un même procédé associe des zones réactionnelles de technologie semi-régénérative et des zones réactionnelles de technologie continue. Dans ce cas, les deux types de régénération sont donc utilisés.

Ces procédés de réformage catalytique, classiques et largement utilisés dans les raffineries, posent des inconvénients en cours de fonctionnement, dus principalement au manque de souplesse des systèmes de régénération utilisés.

En effet, la régénération dans un procédé de type CCR est en prise directe avec ce qui se passe dans les zones réactionnelles, et tout fonctionnement anormal desdites zones se répercute directement sur le fonctionnement de la zone de régénération, car la zone de régénération est généralement programmée uniquement pour un fonctionnement dans des conditions normales d'utilisation. Ainsi tout dysfonctionnement, qui se traduit par une élevation de la teneur en coke du catalyseur à régénérer par rapport à la teneur de fonctionnement normal qui est généralement de 4 à 5 % poids de coke, impose soit de ralentir la vitesse de régénération du catalyseur pour éviter d'importants problèmes d'exothermicité en zone de régénération, ce qui se traduit globalement par une baisse du débit de charge et donc une baisse de production de l'unité, ce qui coûte très cher au raffineur ; soit de changer totalement le catalyseur et de céder le catalyseur usé (si il n'est pas réutilisable) à une société de récupération du platine. D'autre part, la combustion du coke peut s'avérer incomplète.

Quant à la régénération dans un procédé de type semi-régénératif, elle impose une immobilisation de l'unité de production durant toute la durée de la régénération, ce qui coûte cher au raffineur, et ce d'autant plus longtemps qu'un dysfonctionnement des zones réactionnelles aura conduit à une teneur en coke plus élevée qu'en fonctionnement normal.

D'autre part, les régénérations dans de tels procédés de réformage catalytique posent aussi des problèmes techniques. Ainsi de telles régénérations impliquent l'utilisation d'air dilué par l'azote (à teneur en oxygène de 0,1 à 1 % en volume) pour brûler le coke, en particulier lorsque les débits du gaz de combustion sont importants, ainsi que l'injection de composé chloré pendant ladite étape, ce qui pose des problèmes vis-à-vis de l'environnement. De plus, les régénérations conduites selon l'art antérieur dans les procédés de type continu (CCR) ou de type semi-régénératif ne permettent pas d'assurer de manière certaine une parfaite homogénéité de traitement de combustion ou d'oxychloration pour toutes les particules de catalyseurs. Enfin, de tels procédés de réformage catalytique comportant une régénération sur site ne permettent pas de qualifier la totalité du catalyseur car tout échantillon de catalyseur pris sur l'unité (en production et en régénération) est ponctuel et non représentatif de l'ensemble de la masse catalytique. Par exemple une combustion du coke incomplète sur l'ensemble de la masse catalytique pourrait ne pas se voir sur un échantillonnage du catalyseur. Or les procédés de réformage catalytique nécessitent plus particulièrement que d'autres procédés de raffinage et de pétrochimie une surveillance permanente et la plus exacte possible du catalyseur.

Les procédés de régénération hors site de catalyseur existent en raffinage pour les catalyseurs usés issus de l'hydrotraitement. Ils comprennent principalement une étape de strippage des hydrocarbures résiduels, et une étape de combustion du soufre et du carbone. Mais ils ne comprennent pas d'étape d'oxyhalogénation. Les catalyseurs d'hydrotraitement, qui ne comportent généralement pas de métal précieux, ne subissent donc pas les mêmes traitements de régénération que les catalyseurs de réformage catalytique.

L'objet de l'invention est de pouvoir proposer des méthodes de régénération hors site de catalyseurs usés de réformage catalytique conduisant à des résultats techniques au moins aussi bons et le plus souvent meilleurs que les procédés conventionnels de régénération sur site des catalyseurs de réformage catalytique qui sont utilisés à l'heure actuelle.

Un autre objet de l'invention est de pouvoir proposer des méthodes de régénération hors site de tout catalyseur usé de traitement d'hydrocarbures comprenant au moins un métal précieux, de préférence le platine, et pour lequel la régénération doit comporter au moins une étape de combustion du coke et une étape d'oxyhalogénation, de préférence d'oxychloration, pour redisperser ledit métal précieux. Le traitement de régénération selon l'invention permet d'éliminer la majeure partie du coke déposé sur le support et de redisperser la phase métallique.

L'invention concerne donc un procédé de régénération d'un catalyseur usé de traitement d'hydrocarbures, de préférence de réformage, comprenant au moins un métal précieux choisi dans le groupe formé par l'argent, l'or, le ruthénium, le rhodium, le palladium, l'osmium, l'iridium et le platine, de préférence le platine, éventuellement au moins un métal additionnel choisi dans le groupe formé par les métaux des groupes 7, 8, 9, 10, 13 et 14 de la classification périodique des éléments et le cuivre, éventuellement et de préférence au moins un halogène, de façon préférée du chlore, et au moins un support poreux, de préférence de l'alumine, ledit procédé comprenant au moins les deux étapes successives suivantes :
- au moins une étape (1) de combustion du coke présent sur ledit catalyseur en présence d'un gaz comprenant de l'oxygène, à température comprise entre 300 et 680°C, de préférence entre 350 et 550°C, de manière encore plus préférée entre 350 et 470°C, pour une durée comprise entre 0,3 et 7 heures,
- au moins une étape (2) d'oxyhalogénation, de préférence d'oxychloration, sous atmosphère contrôlée d'air, à une température comprise entre 300 et 650°C, de préférence entre 350 et 550°C, pour une durée comprise entre 0,3 et 3 heures et en présence d'un composé halogéné,
caractérisé en ce que ledit procédé est effectué hors site, en ce que l'on utilise pour l'étape (1) de combustion et pour l'étape (2) d'oxyhalogénation un four choisi parmi les fours à lit mobile, à couche mince.

Parmi les fours à lit mobile à couche mince utilisés selon l'invention, on trouve les fours à lit agité, les fours à lit croulant (c'est-à-dire à couche mince, que réacteur soit cyclindrique ou qu'il soit radial), les fours à lit fluidisé ou d'autres fours comme les fours à lit circulant. Par exemple, on peut utiliser les fours de type rotolouvre (c'est-à-dire de type mobile, agité et à couche mince) ou de type four à bandes (c'est-à-dire de type à couche mince et mobile).

Dans le cadre du procédé selon l'invention, les étapes (1) et (2) peuvent être réalisées successivement, dans le même four à lit mobile à couche mince, ou bien dans au moins deux fours à lit mobile différents. Mais dans le cadre du procédé selon l'invention, les étapes (1) et (2) peuvent aussi être réalisées simultanément dans au moins deux fours à lit mobile à couche mince différents.

Le procédé selon l'invention est de préférence tel que le catalyseur usé est issu d'un procédé de réformage de type continu et/ou de type semi-régénératif, c'est-à-dire de type continu, de type semi-régénératif ou de type mixte.

Le procédé de régénération selon l'invention permet au raffineur de résoudre les problèmes posés par la régénération sur site de l'art antérieur. En particulier, ledit procédé permet un meilleur contrôle des deux étapes principales de régénération d'un catalyseur comprenant au moins un métal précieux, de préférence le platine, que sont les étapes de combustion du coke et d'oxychloration. De plus, le procédé de régénération selon l'invention permet une manipulation, externe au site réactionnel du catalyseur comprenant au moins un métal précieux. Ceci n'était pas envisagé par l'homme du métier jusqu'à présent, principalement parce que la manipulation d'un catalyseur très coûteux comprenant au moins un métal précieux et l'étape d'oxyhalogénation hors site, de préférence d'oxychloration hors site étaient des obstacles difficiles à surmonter.

Le procédé de régénération selon l'invention est effectué hors site, c'est-à-dire qu'il est effectué en dehors de l'unité de traitement d'hydrocarbures, de préférence de réformage catalytique, et plus généralement en dehors du site de la raffinerie. Le catalyseur est sorti des zones réactionnelles de la raffinerie puis régénéré avant son retour dans lesdites zones.

L'étape (2) selon l'invention est suivie d'une étape de calcination hors site, plus précisément d'une étape de séchage à une température comprise entre 350 et 550° C et en présence d'un gaz comprenant de l'oxygène, généralement entre 3 et 20 % en volume d'oxygène, par exemple à 500° C en présence d'oxygène. Cette étape se déroule de façon bien connue de l'homme du métier.

Les deux étapes (1) et (2) peuvent être suivies, indépendamment de l'étape éventuelle de calcination décrite précédemment, mais postérieurement à ladite étape de calcination si celle-ci est effectuée, d'une étape hors site de réduction du catalyseur, afin que celui-ci soit à l'état actif pour la réaction de traitement d'hydrocarbures, qui est de préférence la réaction de réformage, ainsi que d'une étape éventuelle hors site de passivation par le soufre. L'étape de passivation par le soufre est effectuée selon la nature du métal additionnel dans le cas où au moins un métal additionnel est présent : si ledit métal est l'étain, l'étape de passivation par le soufre n'a pas à être réalisée. Les étapes de réduction et de passivation par le soufre ont lieu avant que le catalyseur soit remis en zone réactionnelle. Finalement, le procédé de régénération d'un catalyseur de réformage à l'état usé selon l'invention peut comporter l'étape de réduction et l'étape éventuelle de passivation, lesdites étapes étant donc réalisées hors site. Ainsi le procédé selon l'invention comporte une étape supplémentaire éventuelle de réduction du catalyseur à la suite de l'étape (2) d'oxyhalogénation. De plus, le procédé selon l'invention peut comporter une étape supplémentaire éventuelle de réduction du catalyseur suivie d'une étape supplémentaire de sulfuration dudit catalyseur. Mais lesdites étapes peuvent aussi être réalisées sur le site de la raffinerie, c'est-à-dire sur site, généralement dans l'unité de traitement d'hydrocarbures, de préférence de réformage catalytique.

L'étape éventuelle de réduction hors site est une étape conventionnelle de traitement sous gaz contenant de l'hydrogène, à une température généralement comprise entre 200 et 700°C.

L'étape éventuelle de sulfuration hors site est une étape conventionnelle de traitement sous gaz contenant de préférence de l'hydrogène et un composé sulfuré choisi dans le groupe comprenant les sulfures (mono, di ou polysulfures), le sulfure d'hydrogène, les mercaptans, les composés thiophéniques et tout autre composé contenant du soufre et susceptible de se décomposer en H₂S sous pression d'hydrogène.

Le catalyseur régénéré selon le procédé de l'invention est un catalyseur comprenant au moins un métal précieux choisi dans le groupe formé par l'argent, l'or, le ruthénium, le rhodium, le palladium, l'osmium, l'iridium et le platine, de préférence le platine, éventuellement et de préférence au moins un halogène, de façon préférée du chlore (généralement de teneur comprise entre 0 et 3 % poids, de préférence entre 0,5 et 1,1 % poids de chlore dans le cas d'un catalyseur usé de réformage catalytique) et au moins un support poreux choisi parmi les supports de type alumine, silice, zéolithe ou charbon; de préférence ledit catalyseur est un catalyseur conventionnel de réformage catalytique. Dans le cas d'un catalyseur de réformage catalytique, le catalyseur régénéré selon l'invention est un solide poreux généralement sous la forme de petits bâtonnets (extrudés), de billes ou de grains, qui comprend le plus souvent de l'alumine, du chlore, du platine et au moins un métal additionnel. Le métal additionnel est généralement choisi dans le groupe formé par les métaux des groupes 7, 8, 9, 10, 13 et 14 de la classification périodique des éléments et le cuivre, tel que le thallium, le manganèse, le germanium, l'indium, l'iridium, le rhénium ou l'étain, de préférence le rhénium, le plus souvent dans le cas d'un procédé de réformage de type semi-régénératif, ou l'étain, le plus souvent dans le cas d'un procédé de réformage de type continu.

La préparation du catalyseur régénéré selon l'invention est conventionnelle. Dans le cas préféré selon l'invention d'un catalyseur de réformage, elle comprend généralement une fixation des métaux sur le support au cours d'une imprégnation : le précurseur ionique, soluble dans l'eau, est échangé à la surface du support d'alumine ; le catalyseur est ensuite essoré, filtré et séché ; puis il subit une calcination sous balayage d'air à une température généralement légèrement supérieure à 500°C. Après calcination, le catalyseur doit encore être réduit pour être prêt à l'emploi. Cette opération se déroule à haute température sous pression d'hydrogène. Enfin, avant mise en contact avec les hydrocarbures, il est généralement nécessaire de diminuer l'activité hydrogénolisante des petites particules métalliques par injection d'un composé sulfuré : c'est l'étape éventuelle de sulfuration du catalyseur, à laquelle on procède surtout si le métal additionnel est le rhénium ou l'iridium.

Le catalyseur usé, c'est-à-dire que l'on doit régénérer, comprend généralement au moins 1 % poids de carbone, de préférence entre 3 et 20 % poids. Dans le cas préféré selon l'invention d'un catalyseur usé de réformage catalytique, sa teneur en chlore est généralement comprise entre 0,5 et 1,1 % poids.

L'étape (1) est une étape de combustion du coke présent sur ledit catalyseur en présence d'un gaz comprenant de l'oxygène, à température comprise entre 300 et 680°C, de préférence entre 350 et 550°C, de manière encore plus préférée entre 350 et 470°C, pour une durée comprise entre 0,3 et 7 heures. Dans le cadre du procédé de régénération selon l'invention, cette étape (1) de combustion du coke est effectuée dans un four à couche mince, de préférence un four de type roto-louvre ou un four à bandes. De tels fours permettent d'utiliser un gros débit de gaz. De tels fours permettent aussi de ne pas injecter de composé chloré durant ladite étape, car ils assurent une bonne rétention du chlore après la combustion. D'autre part, le catalyseur n'est pas exposé à des excès de concentration de CO/CO₂ ou de H₂O comme c'est le cas dans le cas des procédés de régénération sur site. Enfin, les points chauds et les chemins préférentiels du gaz sont réduits.

Les fours à lit mobile décrits précédemment, comme par exemple les fours de type roto-louvre et les fours à bandes (fours à couche mince et mobile), possèdent toutes les caractéristiques conventionnelles bien connues de l'homme du métier.

Le catalyseur issu de l'étape (1) de combusion du coke comprend moins de 1 % poids de coke, de préférence moins de 0,5 % poids, et la teneur en halogène, de préférence en chlore, dudit catalyseur est généralement supérieure à 0,2, de préférence supérieure à 0,5 % poids dans le cas préféré selon l'invention où le catalyseur usé comprend de l'halogène, de préférence du chlore.

L'étape (2) est une étape d'oxyhalogénation, de préférence d'oxychloration, sous atmosphère contrôlée d'air, comprenant généralement et de façon préférée de 0,1 à 1 % (volume) d'eau, à une température entre 300 et 650°C, de préférence entre 350 et 550°C, pour une durée comprise entre 0,3 et 3 heures et en présence d'un composé halogéné, de préférence d'un composé chloré, par exemple dans le cas où l'halogène est le chlore, un composé chloré comprenant entre 1 et 6 atomes de carbone par molécule tel que le tétrachlorure de carbone CCl₄. Le contenu final du catalyseur en halogène, de préférence en chlore, doit généralement être compris entre 0,9 et 1,2 % poids, de préférence entre 1,0 et 1,1 % poids dans le cas préféré selon l'invention où le catalyseur usé comprend de l'halogène, de préférence du chlore. Dans le cadre du procédé de régénération selon l'invention, il est possible d'effectuer cette étape (2) tout de suite après l'étape (1) de combustion du coke, ou bien de stocker le catalyseur quelque temps dans des conditions appropriées (généralement en fûts ou en sacs, à l'abri de l'eau) puis d'effectuer l'étape (2). Ladite étape (2) d'oxyhalogénation, de préférence d'oxychloration du coke, est effectuée dans un four, distinct ou non du four de combustion de l'étape (1), choisi parmi les fours à lit mobile décrits précédemment comme par exemple les fours à lit agité, par exemple un four rotatif étanche, ce que ne permettent pas les procédés de régénération sur site classiques. L'utilisation d'un tel type de four permet d'améliorer l'homogénéité de traitement du catalyseur, en évitant par exemple la réalisation de chemins préférentiels du gaz traitant. De plus, ladite étape d'oxyhalogénation, de préférence d'oxychloration, peut être réalisée avec une grande flexibilité des conditions opératoires; ainsi, dans le cas préféré selon l'invention où l'halogène est le chlore, il est possible d'opérer dans des conditions surchlorantes, menant à une teneur en chlore du catalyseur après ladite étape (2) supérieure à 1,3 % poids par exemple.

Les fours à lit mobile décrits précédemment, comme par exemple les fours rotatifs étanches, possèdent toutes les caractéristiques conventionnelles bien connues de l'homme du métier.

Comme indiqué plus haut, les deux étapes (1) et (2) peuvent, selon une variante du procédé, être effectuées simultanément dans un même four à lit mobile.

Les caractéristiques du catalyseur issu de l'étape (2) d'oxyhalogénation, de préférence d'oxychloration, sont généralement les suivantes. La teneur en coke dudit catalyseur est généralement inférieure à 0,5 %, de préférence inférieure à 0,1 % poids. La teneur en halogène, de préférence en chlore est généralement supérieure à 0,3 % poids d'halogène, et plus particulièrement pour un catalyseur de réformage ladite teneur est comprise généralement entre 0,8 et 1,3 % poids de chlore, de préférence entre 0,9 et 1,2 % poids de chlore et de manière encore plus préférée entre 1,0 et 1,1 % poids de chlore. La dispersion de la phase métallique doit avoir été sensiblement augmentée par le traitement d'oxyhalogénation, de préférence d'oxychloration. La dispersion s'exprime par une grandeur adimensionnelle, qui est le rapport entre le nombre d'atomes de métal accessibles en surface et le nombre d'atomes total, et elle est mesurée par des techniques de chimisorption quantifiée de gaz, notamment la chimisorption d'oxygène. La surface spécifique du catalyseur est généralement peu modifiée par le traitement d'oxyhalogénation, de préférence d'oxychloration. Dans le cas d'un catalyseur de réformage, la surface spécifique est généralement comprise entre 50 et 300 m²/g, et plus souvent entre 120 et 230 m²/g.

### EXEMPLES

Les exemples suivants illustrent l'invention sans toutefois en limiter la portée. Ils ont été conduit à une échelle de procédé pilote.

### Exemple 1 Régénération hors site d'un catalyseur usé de réformage de type Pt/Sn

Un catalyseur usé de réformage comprenant du platine et de l'étain, et 12,5 % de carbone, est régénéré selon l'étape (1) suivie de l'étape (2). Ledit catalyseur comprend 0,95 % poids de chlore.

L'étape (1) de combustion du coke est réalisée à 440°C sous air, à vitesse volumérique horaire de gaz égale environ à 3 600 h⁻¹ et pour une durée égale à 2 heures. Le four utilisé est un four à lit mobile et à couche mince, utilisé dans des conditions isothermes, dérivé d'un four de type MEMERT.

L'étape (2) d'oxychloration est réalisée à 500°C pendant 5 heures et sous atmosphère d'air (200 l/h de débit volumétrique horaire) comprenant un composé chloré, le tétrachlorure de carbone, injecté à un taux de 0,8 ml/h. Après 2 heures de traitement, la température est égale à 530°C. Le four utilisé est un four à lit mobile et à couche mince, utilisé dans des conditions isothermes, dérivé d'un four de type MEMERT.

Les résultats obtenus sont rassemblés dans le Tableau 1 suivant , sachant que la surface spécifique (SS) est mesurée par la méthode BET, que la mesure de la dispersion est effectuée par adsorption de l'oxygène et que la mesure de la teneur en chlore est effectuée par la technique classique de conductimétrie (utilisation d'une solution d'argent, une solution d'acide nitrique à 0,1 N ayant été utilisée pour libérer le chlore de la surface catalytique), sur 10 g d'échantillon .

**TABLEAU 1**

| Caractéristiques du catalyseur après l'étape de traitement | |
|---|---|
| Combustion du carbone | < 0,1% poids C |
| | SS = 170 m²/g |
| | 0,83 % poids Cl |
| | Dispersion de 79% |
| Oxychloration | < 0,1% poids C |
| | SS = 162 m²/g |
| | 1,1 % poids Cl |
| | Dispersion de 100% |

Par rapport au catalyseur frais, c'est-à-dire au catalyseur avant son introduction pour la première fois en zone de réformage catalytique, qui possède une teneur en chlore de 1,1 % poids, une dispersion de 100 % et une surface spécifique de 175 m²/g, les caractéristiques du catalyseur après oxychloration sont très satisfaisantes.

### Exemple 2 Régénération hors site d'un catalyseur usé de réformage de type Pt/Re

Un catalyseur usé de réformage comprenant du platine et du rhénium, et 12,7 % de carbone, est régénéré selon l'étape (1) suivie de l'étape (2).. Ledit catalyseur comprend 1,05 % poids de chlore.

L'étape (1) de combustion du coke est réalisée à 450°C sous air, à vitesse volumérique horaire de gaz égale environ à 3 600h⁻¹ et pour une durée égale à 2 heures. Le four utilisé est un four à lit mobile et à couche mince, utilisé dans des conditions isothermes, dérivé d'un four de type MEMERT.

L'étape (2) d'oxychloration est réalisée à 530°C pendant 5 heures et sous atmosphère d'air (200 l/h de débit volumétrique horaire) comprenant un composé chloré, le tétrachlorure de carbone, injecté à un taux de 0,9 ml/h. Après 2 heures de traitement, la température est égale à 530°C. Le four utilisé est un four à lit mobile et à couche mince, utilisé dans des conditions isothermes, dérivé d'un four de type MEMERT.

Ces étapes ont suivies d'une étape de réduction à 350°C pendant 1 heure avec un gaz comprenant 5% de H₂/N₂ à vitesse volumique horaire de 1000h⁻¹, puis d'une étape de sulfuration avec un gaz comprenant 3% de H₂S dans H₂ de façon à passiver la phase rhénium avant d'employer de nouveau le catalyseur en réformage catalytique.

Les résultats obtenus sont rassemblés dans le Tableau 2 suivant, avec les mêmes indications que pour le Tableau 1 de l'exemple 1 :

**TABLEAU 2**

| Caractéristiques du catalyseur après l'étape de traitement | |
|---|---|
| Combustion du carbone | < 0,1% poids C |
| | SS = 172 m²/g |
| | 0,79 % poids Cl |
| | |
| Oxychloration | < 0,1% poids C |
| | SS = 168 m²/g |
| | 1,1 % poids Cl |
| | Dispersion de 100% |

Par rapport au catalyseur frais, c'est-à-dire au catalyseur avant son introduction pour la première fois en zone de réformage catalytique, qui possède une teneur en chlore de 1,1 % poids, une dispersion de 100 % et une surface spécifique de 180 m²/g, les caractéristiques du catalyseur après oxychloration sont très satisfaisantes.

## Revendications

1. Procédé de régénération d'un catalyseur usé de traitement d'hydrocarbures comprenant au moins un métal précieux choisi dans le groupe formé par l'argent, l'or, le ruthénium, le rhodium, le palladium, l'osmium, l'iridium et le platine, et au moins un support poreux, ledit procédé comprenant au moins les deux étapes successives suivantes :
• au moins une étape (1) de combustion du coke présent sur ledit catalyseur en présence d'un gaz comprenant de l'oxygène, à température comprise entre 300 et 680°C et pour une durée comprise entre 0,3 et 7 heures,
• au moins une étape (2) d'oxyhalogénation sous atmosphère contrôlée d'air, à une température comprise entre 300 et 650°C, pour une durée comprise entre 0,3 et 3 heures et en présence d'un composé halogéné,
caractérisé en ce que ledit procédé est effectué hors site, en ce que l'on utilise pour l'étape (1) de combustion et pour l'étape (2) d'oxyhalogénation un four à lit mobile, à couche mince.

2. Procédé selon la revendication 1 tel que les étapes (1) et (2) sont réalisées successivement dans le même four à lit mobile.

3. Procédé selon la revendication 1 tel que les étapes (1) et (2) sont réalisées successivement dans au moins deux fours à lit mobile différents.

4. Procédé selon la revendication 1 tel que les étapes (1) et (2) sont réalisées simultanément dans au moins deux fours à lit mobile différents.

5. Procédé selon l'une des revendications 1 à 4 tel que ledit métal précieux est le platine.

6. Procédé selon l'une des revendications 1 à 5 tel que ledit catalyseur comprend de l'halogène.

7. Procédé selon l'une des revendications 1 à 6 tel que ledit support est l'alumine.

8. Procédé selon l'une des revendications 1 à 7 tel que ledit catalyseur comprend au moins un métal additionnel choisi dans le groupe formé par les métaux des groupes 7, 8, 9, 10, 13 et 14 de la classification périodique des éléments et le cuivre.

9. Procédé selon l'une des revendications 1 à 8 tel que ledit catalyseur est un catalyseur usé de réformage de type continu, de type semi-régénératif ou de type mixte, comprenant du platine, du chlore, de l'alumine et au moins un métal additionnel choisi dans le groupe formé par les métaux des groupes 7, 8, 9, 10, 13 et 14 de la classification périodique des éléments et le cuivre.

10. Procédé selon l'une des revendications 1 à 9 comportant une étape supplémentaire de calcination du catalyseur à la suite de l'étape (2) d'oxyhalogénation.

11. Procédé selon l'une des revendications 1 à 10 comportant une étape supplémentaire de réduction du catalyseur à la suite de l'étape (2) d'oxyhalogénation.

12. Procédé selon la revendication 11 comportant une étape supplémentaire de sulfuration à la suite de l'étape de réduction.

13. Procédé selon l'une des revendications 1 à 12 tel que l'étape (2) d'oxyhalogénation est une étape d'oxychloration.

## Patentansprüche

1. Verfahren zur Regenerierung eines verbrauchten Katalysators zur Behandlung von Kohlenwasserstoffen, wenigstens ein Edelmetall umfassend, das gewählt ist aus der durch Silber, Gold, Ruthenium, Rhodium, Palladium, Osmium, Iridium und Platin gebildeten Gruppe und wenigstens einem porösen Träger, wobei das Verfahren wenigstens die beiden aufeinanderfolgenden Stufen umfaßt:
- wenigstens eine Stufe (1) zur Verbrennung des auf diesen Katalysator vorhandenen Kokses in Anwesenheit eines sauerstoffaufweisenden Gases bei einer Temperatur zwischen 300 und 680°C und einer Dauer zwischen 0,3 und 7 Stunden,
- wenigstens eine Stufe (2) der Oxyhalogenierung unter geregelter Luftatmosphäre bei einer Temperatur zwischen 300 und 650°C über eine Dauer zwischen 0,3 und 3 Stunden und in Anwesenheit einer halogenierten Verbindung,
dadurch gekennzeichnet, daß dieses Verfahren ex situ durchgeführt wird und daß man für die Verbrennungsstufe (1) und für die Oxyhalogenierungsstufe (2) einen Ofen mit beweglichem Bett in Dünnschicht-Bauart verwendet.

2. Verfahren nach Anspruch 1, derart, daß die Stufen (1) und (2) nacheinander in ein und dem gleichen Ofen mit beweglichem Bett realisiert werden.

3. Verfahren nach Anspruch 1, derart, daß die Stufen (1) und (2) nacheinander in wenigstens zwei unterschiedlichen Öfen mit beweglichem Bett realisiert werden.

4. Verfahren nach Anspruch 1, derart, daß die Stufen (1) und (2) gleichzeitig in wenigstens zwei unterschiedlichen Öfen mit beweglichem Bett realisiert werden.

5. Verfahren nach einem der Ansprüche 1 bis 4, derart, daß dieses Edelmetall Platin ist.

6. Verfahren nach einem der Ansprüche 1 bis 5, derart, daß dieser Katalysator Halogen umfaßt.

7. Verfahren nach einem der Ansprüche 1 bis 6, derart, daß dieser Träger Aluminiumoxid ist.

8. Verfahren nach einem der Ansprüche 1 bis 7, derart, daß dieser Katalysator wenigstens ein Zusatzmetall umfaßt, das gewählt ist aus der Gruppe, die gebildet wird durch die Metalle der Gruppen 7, 8, 9, 10, 13 und 14 des Periodensystems der Elemente sowie Kupfer.

9. Verfahren nach einem der Ansprüche 1 bis 8, derart, daß dieser Katalysator ein verbrauchter Reformierungskatalysator vom kontinuierlichen Typ, vom semiregenerativen Typ oder vom Mischtyp ist, Platin, Chlor, Aluminiumoxid und wenigstens ein Zusatzmetall umfaßt, das gewählt ist aus der Gruppe, die gebildet ist durch die Metalle der Gruppen 7, 8, 9, 10, 13 und 14 des Periodensystems der Elemente sowie Kupfer.

10. Verfahren nach einem der Ansprüche 1 bis 9, eine zusätzliche Kalzinierungsstufe des Katalysators anschließend an die Oxyhalogenierungsstufe (2) umfassend.

11. Verfahren nach einem der Ansprüche 1 bis 10, eine zusätzliche Stufe der Reduktion des Katalysators anschließend an die Stufe (2) der Oxyhalogenierung umfassend.

12. Verfahren nach Anspruch 11, eine zusätzliche Stufe der Sulfurierung anschließend an die Reduktionsstufe umfassend.

13. Verfahren nach einem der Ansprüche 1 bis 12, derart, daß die Stufe (2) der Oxyhalogenierung eine Oxychlorierungsstufe ist.

## Claims

1. A process for the regeneration of a used hydrocarbon treatment catalyst containing at least one precious metal selected from the group formed by silver, gold, ruthenium, rhodium, palladium, osmium, iridium and platinum, and at least one porous support, said process comprising at least one of the following two successive steps:
- at least one combustion step (1) for the coke present on said catalyst carried out in the presence of an oxygen-containing gas, at a temperature in the range 300°C to 680°C for a time in the range 0.3 to 7 hours,
- at least one oxyhalogenation step (2) carried out in a controlled air atmosphere, at a temperature in the range 300°C to 650°C, for a time in the range 0.3 to 3 hours and in the presence of a halogenated compound, characterised in that said process is carried out offsite, and in that a moving bed furnace is used for combustion step (1) and oxyhalogenation step (2).

2. A process according to claim 1, in which steps (1) and (2) are carried out successively in the same moving bed furnace.

3. A process according to claim 1, in which steps (1) and (2) are carried out successively in at least two different moving bed furnaces.

4. A process according to claim 1, in which steps (1) and (2) are carried out simultaneously in at least two different moving bed furnaces.

5. A process according to any one of claims 1 to 4 in which said precious metal is platinum.

6. A process according to any one of claims 1 to 5 in which said catalyst contains a halogen.

7. A process according to any one of claims 1 to 6 in which said support is alumina.

8. A process according to any one of claims 1 to 7 in which said catalyst contains at least one additional metal selected from the group formed by metals from groups 7, 8, 9, 10, 13 and 14 of the periodic classification of the elements and copper.

9. A process according to any one of claims 1 to 8 in which said catalyst is a used reforming catalyst from a continuous, semi-regenerative or mixed type process, containing platinum, chlorine, alumina and at least one additional metal selected from the group formed by metals from groups 7, 8, 9, 10, 13 and 14 of the periodic classification of the elements and copper.

10. A process according to any one of claims 1 to 9, comprising a supplementary calcining step for the catalyst after oxyhalogenation step (2).

11. A process according to any one of claims 1 to 10, comprising a supplementary reduction step for the catalyst after oxyhalogenation step (2).

12. A process according to claim 11, comprising a supplementary sulphuration step following the reduction step.

13. A process according to any one of claims 1 to 12, in which oxyhalogenation step (2) is an oxychlorination step.
